Europäisches Patentamt

European Patent Office

Office européen des brevets

(11) Publication number: **0 118 936**
**B1**

# EUROPEAN PATENT SPECIFICATION

(45) Date of publication of patent specification: **28.10.87**

(51) Int. Cl.⁴: **H 04 N 9/82**

(21) Application number: **84200167.9**

(22) Date of filing: **07.02.84**

(54) Method of encoding a recording signal, record carrier provided with a recording signal encoded in accordance with the method, apparatus for carrying out the method, and apparatus for reproducing a signal encoded in accordance with the method.

(30) Priority: **14.02.83 NL 8300541**
**15.07.83 NL 8302542**

(43) Date of publication of application:
**19.09.84 Bulletin 84/38**

(45) Publication of the grant of the patent:
**28.10.87 Bulletin 87/44**

(84) Designated Contracting States:
**AT BE CH DE FR GB IT LI NL SE**

(56) References cited:
**US-A-3 893 163**
**US-A-3 969 756**

**IEEE TRANSACTIONS ON CONSUMER
ELECTRONICS, vol. CE-22, no. 4, November
1976, pages 309-317, New York, US; P.W.
BÖGELS: "System coding parameters,
mechanics and electromechanics of the
reflective video disc player"**

(73) Proprietor: **N.V. Philips' Gloeilampenfabrieken
Groenewoudseweg 1
NL-5621 BA Eindhoven (NL)**

(72) Inventor: **Schouhamer Immink, Kornelis
Antonie**
c/o INT. OCTROOIBUREAU B.V. Prof. Holstlaan 6
NL-5656 AA Eindhoven (NL)
Inventor: **Aarts, Ronaldus Maria**
c/o INT. OCTROOIBUREAU B.V. Prof. Holstlaan 6
NL-5656 AA Eindhoven (NL)
Inventor: **Kahlman, Josephus Arnoldus H.M.**
c/o INT. OCTROOIBUREAU B.V. Prof. Holstlaan 6
NL-5656 AA Eindhoven (NL)
Inventor: **Hoogendijk, Adrianus Huibert**
c/o INT. OCTROOIBUREAU B.V. Prof. Holstlaan 6
NL-5656 AA Eindhoven (NL)

(74) Representative: **Beckers, Hubertus Franciscus
Maria et al
INTERNATIONAAL OCTROOIBUREAU B.V. Prof.
Holstlaan 6
NL-5656 AA Eindhoven (NL)**

**0 118 936**

(56) References cited:

PHILIPS TECHNICAL REVIEW, vol. 40, no. 6,
June 1982, pages 157-165, Eindhoven, NL;
J.P.J. HEEMSKERK et al.: "Compact disc:
system aspects and modulation"

PHILIPS TECHNICAL REVIEW, vol. 40, no. 6,
June 1982, pages 151-156, Eindhoven, NL;
M.G. CARASSO et al.: "The compact disc
digital audio system"

## Description

Method of encoding a recording signal, record carrier provided with a recording signal encoded in accordance with the method, apparatus for carrying out the method, and apparatus for reproducing a signal encoded in accordance with the method.

The invention relates to a method of encoding a recording signal comprising a composite colour video signal and a further signal in a transmission system for recording and reproducing said recording signal on a record carrier, in particular an optically readable disc-shaped record carrier, a carrier signal having a frequency in the range of 6.5—9.3 MHz being frequency-modulated by the composite colour video signal.

The invention also relates to a record carrier provided with a recording signal encoded in accordance with the method, an apparatus for carrying out the method, and an apparatus for reproducing a signal encoded in accordance with the method.

Such a method, record carrier and apparatus are *inter alia* known from the article "System coding parameters, mechanics and electromechanics of the reflective video disc player" by P. W. Bögels, published in "IEEE Transactions on Consumer Electronics", November 1976, pages 309—317, which publication is herewith incorporated by reference, wherein said further signal is an audio signal taking into account possible crosstalk of audio information into video information, possible crosstalk of, in particular, lower side bands of the modulated video information into the audio information, and disturbing effects as a result of cross-modulation products, it has been found that the audio information can be accommodated in the form of two carrier waves modulated with the audio information and having frequencies which have been selected carefully in relation to the video carrier frequencies. For NTSC the frequencies selected for these two carrier waves are 2.3 MHz and 2.8 MHz and that selected for the video carrier wave is 8.1 MHz (black-level frequency).

The known method, record carrier and apparatus provide an excellent video reproduction quality and an acceptable audio reproduction quality. It is the object of the invention to provide a method of the type mentioned in the opening paragraph, a record carrier provided with a recording signal encoded in accordance with the method, an apparatus for carrying out the method, and an apparatus for reproducing a signal encoded in accordance with the method, by means of which an improved audio reproduction quality can be achieved inter alia if the further signal is an audio signal. To this end the method in accordance with the invention is characterized in that the further signal is a digital signal comprising a bit stream of data bits which can each assume a limited number of discrete values, which digital signal occupies a frequency band below the first-order side band of the frequency-modulated carrier signal, and said frequency-modulated carrier signal is pulse-width-modulated by the digital signal.

The further signal formed by the digital signal may be a digitized audio signal but also a data signal for, for example, a game computer. Alternatively, the digital signal may be a digital time-compressed audio signal, for example for use in combination with a "still picture". Then it is possible to scan this still picture repeatedly, the sound being reproduced in expanded form so as to gain playing time.

The invention is based on the insight that although said article states that the addition of the frequency-modulated carrier waves of comparatively narrow bandwidth is problematic, it has been found possible to accommodate a digital audio signal of comparatively large bandwidth because:

—the digital audio signal can be accommodated in the frequency band below the necessarily present first-order lower side band of the modulated video carrier, so that crosstalk of the audio signal into the video signal can be limited,

—the second-order lower side band and possibly a higher-oder lower side band of the modulated video carrier, which cannot be filtered out in advance because it is caused by *inter alia* the pulse-width modulation and lies within the frequency spectrum of the digital audio signal, need not be disturbing because a digital signal is more immune to disturbances by analogue signals of comparatively low amplitude,

—the intermodulation components need not be disturbing because the relative amplitude of the digital signals may be comparatively small because a substantially smaller signal-to-noise ratio is permissible with digital signals than with analogue signals.

It is noted here that it is possible to accommodate a digital signal representing digital data instead of a digital signal representing analogue audio.

The method in accordance with the invention may further be characterized in that the further signal comprises a series of digital words with a repetition frequency of 44.1 KHz, which is subjected to EFM (eight-to-fourteen modulated) modulation prior to recording. This method is advantageous because EFM modulation is particularly immune to disturbances and the modulation thus defined is the modulation used in "compact-disk-digital-audio" players—which are made by various manufacturers—so that it is a combined audio-video player which can be constructed in a simple manner and the commercially available integrated circuits for EFM modulation can be utilized in a player for reproducing a recording signal encoded in accordance with this method. For a definition of EFM modulation reference is made to "Philips Technical Review", Vol. 40, 1982, No. 6, the entire issue but in particular pages 157—164, which entire issue is herewith incorporated by reference.

A further characteristic feature of a method in accordance with the invention is that prior to recording the digital signal is passed through a low-pass filter having a cut-off frequency in the range from 1.5 to 2 MHz. This reduces possible cross-talk of the digital audio signal into the video signal. This bandwidth reduction is found to have no adverse effect on the audio reproduction quality.

In order to minimize crosstalk and intermodulation effects it is advantageous in a method in accordance with the invention that prior to recording the digital signal is passed through a low-frequency pre-emphasis filter in which signals of a frequency below a cut-off frequency are pre-emphasized relative to signals of a frequency above the said cut-off frequency and, after read-out, are passed through a filter which is complementary thereto. This step is based on the recognition that for low frequencies more interference occurs than for high frequencies owing to the use of, in particular, a helium-neon laser. This pre-emphasis provides a maximum reduction of the digital signal.

With respect to the cut-off frequency this method may further be characterized in that cut-off frequency of the low-frequency pre-emphasis filter is situated in the range from 100 kHz to 1 MHz. This cut-off freqency then corresponds to the frequency where the spectrum of the EFM modulation has a maximum.

For the reproduction of EFM-coded signals stringent requirements are imposed on the accuracy of the necessary clock signals. The same applies to the horizontal synchronizing signals of the video signal, which control the speed of the turntable thus influencing the frequency of the audio signal being reproduced. Therefore, it is advantageous in a method in accordance with the invention that during reproduction of the recorded signal a first reference frequency, which is related to the said repetition frequency of 44.1 kHz, is generated for the decoding of the digital signal, that a second reference frequency for the processing of the composite colour video signal, which second reference frequency is related to the horizontal synchronizing frequency of said video signal, is generated, and that said first and second reference frequencies are both derived from a third reference frequency. In this way it can be achieved that the second reference frequency is sufficiently accurate and is related to the first reference frequency in a sufficiently accurate manner.

In order to meet the stringent accuracy requirements and to enable the first and second reference frequencies to be generated in a simple manner, the method in accordance with the invention is further characterized in that the composite colour video signal is a PAL colour video signal, the first and the second reference frequency are derived from the third reference frequency of $n \times 4.234375$ MHz ($n=1, 2, 3, 4, ...$), the second reference frequency being derived from the third reference frequency by dividing said third reference by $n \times 271$.

For the same reasons, but now for use with the NTSC standard instead of the PAL standard, this method may further be characterized in that the composite colour video signal is an NTSC colour video signal, and the first and the second reference frequency are derived from a third reference frequency of $n \times 4.232518$ MHz ($n=1, 2, 3, 4$ ...), the second reference frequency being derived from said third reference frequency by dividing said third reference frequency by $n \times 269$.

The invention is also embodied in a record carrier provided with a recording signal encoded in accordance with the inventive method, This record carrier is characterized by a track pattern of optically detectable areas which alternate with intermediate areas, which areas have a mutual spacing in the track direction which is modulated in conformity with the instantaneous period of the frequency-modulated composite colour video signal and a length relative to the adjacent intermediate areas which can assume substantially at least two distinct discrete values, the digital signal being encoded in the sequence of said distinct values.

The invention is also embodied in an apparatus for carrying out the inventive method. This apparatus is characterised in that it comprises an FM-modulator for modulating a composite colour video signal on a carrier wave having a frequency in the range of 6.5—9.3 MHz and a pulse-width modulator for the pulse-width modulation of said frequency-modulated carrier signal by a digital signal comprising a bit stream of data bits which can each assume a limited number of discrete values, which digital signal occupies a frequency band below the first-order sideband frequency-modulated carrier signal.

A preferred embodiment of this apparatus may further be characterized in that the pulse-width modulator is preceded by an EFM modulator.

In order to limit the bandwidth of the digital signal this preferred embodiment is further characterized in that a low-pass filter having a cut-off frequency in the range from 1.5 to 2 MHz is arranged between the EFM-modulator and the pulse-width modulator.

Alternatively, this apparatus in accordance with the invention may further be characterized in that the pulse-width modulator is preceded by a low-frequency pre-emphasis filter in which signals of a frequency lower than the cut-off frequency are emphasized relative to signals of a frequency higher than said cut-off frequency. In this respect it is advantageous if the cut-off frequency of the low-frequency pre-emphasis filter is situated in the range from 100 kHz to 1 MHz.

Alternatively, the apparatus in accordance with the invention may be characterized in that there are provided means for producing the second-order lower side-band component of the modulated composite colour video signal. In this way the influence of this component is reduced by the use of a technique, known *per se*, which is described *inter alia* in United States Patent Specification No. 4,332,342 (PHN 9132), which Patent Specification is herewith incorporated by reference.

The invention is also embodied in an apparatus for reproducing a signal encoded by the inventive method and such apparatus is characterized in that it comprises and FM-demodulator for recovering the composite colour video signal and a pulse-width demodulator for recovering the digital signal.

A preferred embodiment of this apparatus in accordance with the invention is characterized in that the pulse-width demodulator is followed by an EFM-demodulator.

This apparatus may further by characterized in that the pulse-width demodulator is followed by a high-frequency pre-emphasis filter in which signals of a frequency above a cut-off frequency are emphasized relative to signals of a frequency below said cut-off frequency.

With respect to said cut-off frequency this embodiment may further be characterized in that the cutoff frequency of the high-frequency pre-emphasis filter is situated in a range from 100 kHz to 1 MHz.

With respect to the generation of reference frequencies this apparatus may further be characterized by a first circuit for supplying a first reference frequency which is related to a frequency of 44.1 kHz for the decoding of the digital signal, a second circuit for supplying a second reference frequency which is related to the horizontal synchronizing frequency of said video signal, and a frequency generator which supplies a third reference frequency to which the first and second reference frequencies are locked.

For the reproduction of PAL-signals this apparatus may further be characterized in that the frequency generator tuned to a frequency of $n \times 4.234375$ MHz ($n = 1, 2, 3, 4, ...$) and the second circuit produces the second reference frequency by dividing the third reference frequency by $n \times 271$.

For the reproduction of NTSC-sigals this apparatus may further be characterized in that the frequency generator is tuned to a frequency of $n \times 4.232518$ MHz ($n = 1, 2, 3, 4, ...$) and the second circuit produces the second reference frequency by dividing the third reference frequency by $n \times 269$.

When this method of generating the second and third reference frequencies is used during recording the first reference frequency is locked to the second reference frequency by employing a common frequency reference. During reproduction the two frequencies are then recovered by frequency division. Since the specified second reference frequency can never be recovered exactly by division, an error arises which can be compensated for by introducing a compensating frequency-error during recording. This compensating frequency-error, however, accumulates, which leads to a time shift of the audio signal with respect to the video signal, so that the "lip synchronism" (the synchronism of the sound with the lip movements of persons in the picture) may be impaired. Depending on the magnitude of the error the method described sometimes cannot be utilized. An apparatus in accordance with the invention in which no time shift occurs in generating the first and second reference frequencies may further be characterized by a video-time-base signal separating circuit for extracting a video-time-base signal from the demodulated colour video signal, a phase-comparator circuit for comparing the video-time-base signal with the video-time-base reference signal and supplying a control signal as a function of the phase difference, a speed-control circuit for controlling the speed of transport of the record carrier as a function of said control signal in order to eliminate video-time-base errors, a controllable oscillator circuit for supplying a signal which is related to a repetition frequency of the digital signal, and a control loop for locking said oscillator circuit to a data-time-base signal which is derivable from the digital signal.

By controlling the drive in such a way that the video time base is correct, the digital signal will also be available with a highly stable time base and the first reference frequency can be derived directly from the digital signal.

If according to the invention a digital signal is sampled with a sampling frequency of 44.1 kHz and a word length of $2 \times 16$ bits (16 bits per stereo channel) is subjected to EFM modulation and accommodated in the lower band of the analog video signal, it is found that in the case of an NTSC video disc the analog FM audio signals can be maintained, so that such video discs can also be played on video-disc players which are not equipped with a reproducing circuit for digital signals. However, in the case of PAL video discs it is found that the available bandwidth is inadequate to accommodate both the analog FM audio channels and one digital EFM channel with a sampling frequency of 44.1 kHz and a word length of $2 \times 16$ bits. If the analog FM audio channels must now be maintained for the sake of compatibility, a digitally encoded audio signal can be accommodated only if the bandwidth is limited drastically.

In this respect the method in accordance with the invention may be characterized in that the further signal comprises a sequence of $2 \times 12$ bit digital words, 8 words of $2 \times 12$ bits being grouped into frame and being subjected to EFM modulation prior to recording.

An advantage of this method is that commercially available ICs for EFM demodulation and error correction may be used in unmodified form. Indeed, in the case of EFM modulation in accordance with the Compact Disc standard 6 words of $2 \times 16$ bits are arranged as frames which are EFM modulated. These frames may then accommodate 8 words of $2 \times 12$ bits.

This method in accordance with the invention may be characterized further in that the $2 \times 12$-bit digital words in said sequence have a repetition frequency of 32 kHz.

The invention will now be described in more detail, by way of example, with reference to the drawings, in which:

Figure 1 schematically shows the principal components of the spectrum of the frequency-modulated carrier signal for a video signal in conformity with the PAL standard,

Figure 2 schematically shows the principal components of the spectrum of the frequency-modulated carrier signal for a video signal in conformity with the NTSC standard.

Figure 3 is a graph indicating the relative level of a pulse-width modulation of the frequency-modulated carrier signal, for which level visible interference occurs in the reproduced video picture, as a function of the frequency,

Figure 4 shows the frequency diagram of a low-frequency pre-emphasis filter,

Figure 5 shows the spectrum of the EFM-modulated digital signal after having passed through the low-pass filter and the low-frequency pre-emphasis filter,

Figure 6 shows an apparatus for encoding a recording signal in accordance with the invention,

Figure 7 shows an apparatus for reproducing a recording signal encoded by the apparatus using the inventive method,

Figure 8 shows some diagrams to illustrate the operation of the pulse-width modulator used in the apparatus shown in Figure 6,

Figure 9 is an alternative to the apparatus shown in Figure 7, and

Figure 10 is an alternative to a part of the apparatus shown in Figure 9.

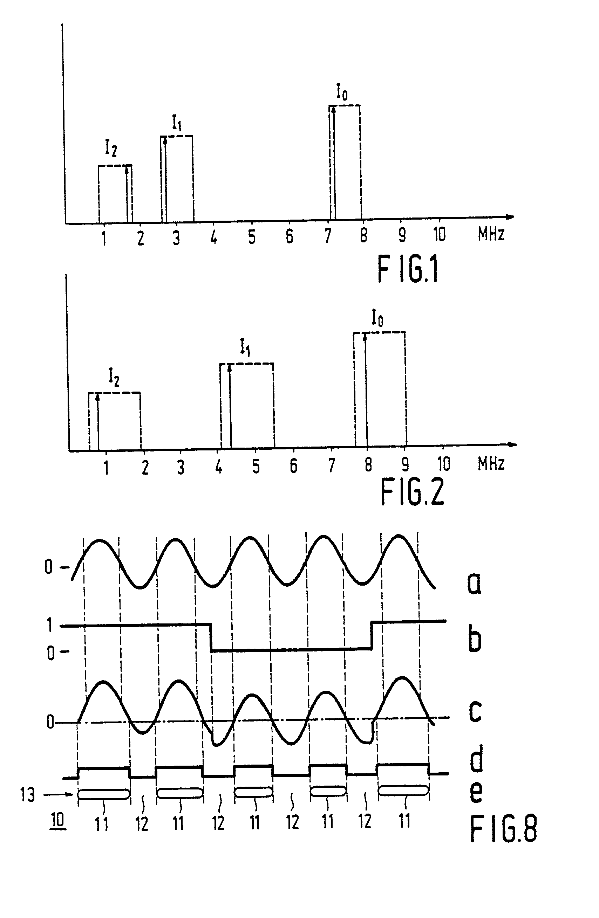

Figure 1 shows the spectrum of a PAL-video signal which is frequency modulated on a 7.1 MHz carrier (frequency in the case of modulation by the black level of the video signal), where $I_0$ is the principal component which represents the frequency as a function of the amplitude of the video signal, $I_1$ is the first-order lower side-band, also referred to as the chroma band, which is situated at 4.43 MHz from the principal component $I_0$, 4.43 MHz being the frequency of the chrominance carrier in the video signal, and $I_2$ is the second-order side band which is mirror-inverted relative to the frequency zero point and which is situated at a distance of 8.86 MHz from the zero point. In the known apparatus two frequency-modulated audio carriers of 0.683 and 1.066 MHz are added to this signal.

Figure 2 shows the spectrum of an NTSC video signal which is frequency-modulated on a carrier wave of 8.1 MHz (frequency in the case of modulation by the black level of the video signal). Since in an NTSC-signal the chrominance carrier has a frequency of 3.58 MHz, the lower side bands $I_1$ and $I_2$ are now spaced at distances of 3.58 and 7.16 MHz, respectively. In the known apparatus the audio signals are added as FM-carriers at 2.3 and 2.8 MHz.

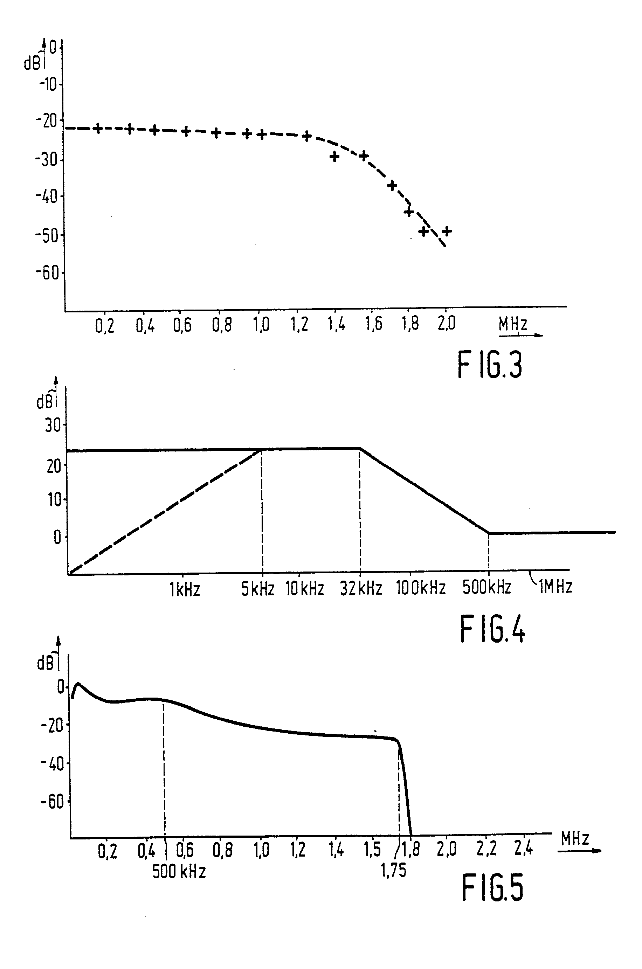

Figure 3 shows the results of a measurement of the effect of a pulse-width modulation of the carrier which is frequency modulated by the video signal (in the present case PAL) on the picture quality. The relative amplitude of the signal with which the carrier is pulse-width modulated is plotted, showing the influence on the picture as a function of the frequency. The graph shows that this influence remains fairly constant up to approximately 1.5 MHz and increases above this frequency. It follows from the graph that pulse-width modulation may be applied with a maximum signal level when this signal is passed through a low-pass filter having a cut-off frequency in the range of from 1.5 to 2 MHz.

In optical recording the He-Ne laser gives rise to a degraded signals-to-noise ratio at low frequencies. Since for the coding method in accordance with the invention a comparatively weak signal strength of the digital audio signal is desirable, it is advantageous to emphasize the signal strength for low frequencies in comparison with the signal strength for higher frequencies. A suitable cut-off frequency is situated in the range of 100 kHz—1 MHz, in particular at 500 kHz, because at 500 kHz the EFM-spectrum exhibits a maximum and rolls off below this frequency.

Figure 4 shows the frequency diagram of a suitable low-frequency pre-emphasis filter. The cut-off frequency is situated at 500 kHz. Below this frequency the signal strength is boosted by 6 dB/octave, which is easy to achieve. The cross-over frequency at which the characteristic becomes flat again (in the present case for example at approximately 32 kHz) is determined by the pre-emphasis level for low frequencies, which level is dictated by the limit of visibility (Figure 3) and its possible influence on control systems such as the radial tracking. In the present example the pre-emphasis is approximately 23 dB.

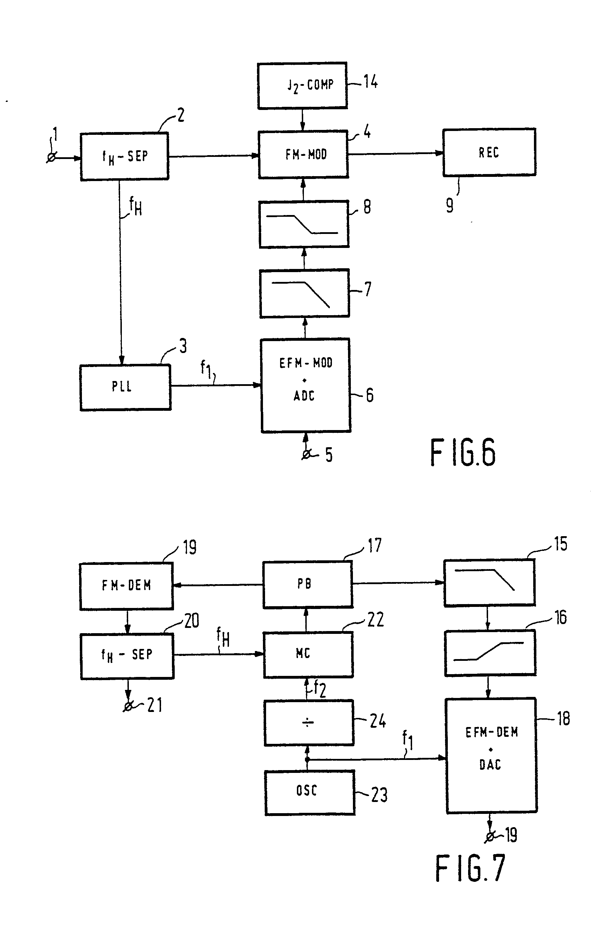

Figure 5 shows the resulting EFM-spectrum after low-pass filtering with a cut-off frequency of 1.75 MHz and after the passage through a low-frequency pre-emphasis filter having a characteristic as shown in Figure 4. This spectrum rises gradually with approximately 23 dB up to 500 kHz, after which the low-frequency pre-emphasis filter ensures that the spectrum remains substantially constant down to very low frequencies. This spectrum thus obtained can be accommodated in the frequency band below the $I_1$ component (Figures 1 and 2) without any significant problems, whilst in the case of an NTSC-signal the two audio FM-carriers can be maintanined, so that it is possible to manufacture a record carrier with both digital audio and FM-audio, which can be read on both types of player.

In Figure 4 a broken line represents a frequency roll-off for frequencies lower than, for example, 5 kHz, which may be useful in order to prevent the various low-frequency control systems from being disturbed.

Figure 6 shows an apparatus for encoding a recording signal in accordance with the invention. It comprises an input 1 for receiving a composite video signal. By means of a sync-separator 2 a signal of a frequency $(f_h)$ equal to the frequency for the horizontal synchronizing signals in the composite video signal is extracted, which is applied to a frequency generator 3 which comprises, for example, a phase-locked loop. This frequency generator 3 supplies a signal of a frequency $f_1$ for the processing of the digital audio signal, in the present example a signal of a frequency of 4.2336 MHz (=96×44.1 kHz; 44.1 kHz being the sampling frequency of the analogue audio signal). Moreover, the composite video signal is applied to an FM-modulator 4, for example a voltage-controlled oscillator which is controlled by the video signal. Subsequently, the FM-signal is fed to a device 9 which in a manner known *per se* records the FM-signal on a record carrier, in particular a video disc, by means of a laser.

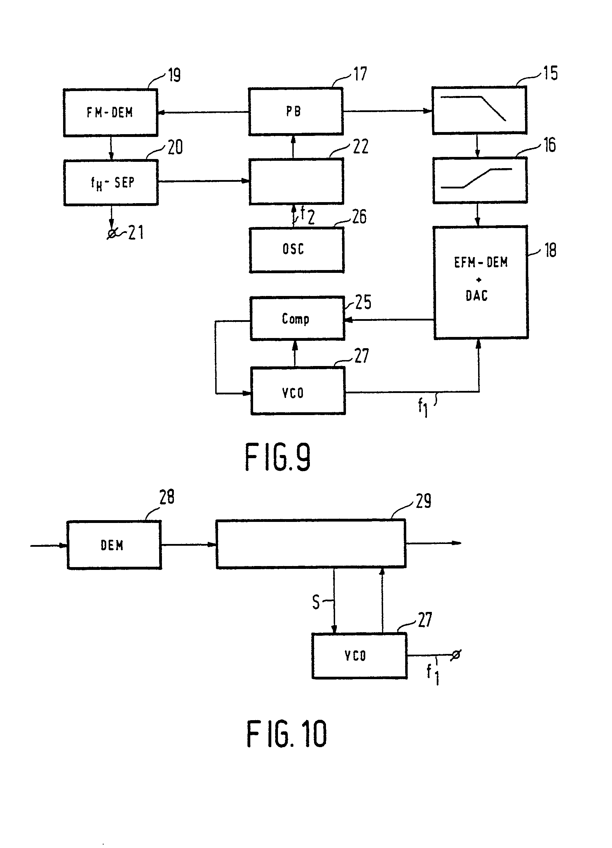

The analogue audio signal is applied to the signal processing unit 6, which *inter alia* comprises an analogue-digital converter and an EFM-modulator, and which may be of a type as described in the article in "Philips Technical Review" mentioned in the introductory part. This processing unit receives the signal of the frequency $f_1$=4.2336 MHz from the generator 3 for synchronizing the signal processing. The EFM-modulated signal is subsequently passed through a low-pass filter 7 having a cut-off frequency of 1.75 MHz and through a low-frequency pre-emphasis filter 8 having a characteristic as shown in Figure 9 and is then applied to a pulse-width control input of the FM-modulator 4. In its simplest form this pulse-width control is obtained by addition prior to limiting, which will be explained with reference to Figure 8.

Figure 8a shows a signal, in the present case a sinewave signal, representing the frequency-modulated composite video signal. Figure 8b shows a digital signal having a frequency lower than the frequency of the video signal *a* and having a lower amplitude. Figure 8c shows the sum of these two signals. If after suitable amplification this signal is limited, a signal as shown in Figure 8d is obtained. This signal is a square-wave signal with a repetition frequency corresponding to the instantaneous frequency of the frequency-modulated video signal and a relative pulse-width corresponding to the digital signal. If this signal *d* controls a laser which inscribes an optically readable disc *10*, this results in a pattern as shown in Figure 8e, comprising a track 13 of optically detectable areas 11 of a length corresponding to the pulses in the signal shown in Figure 8d and intermediate areas 12.

In order to compensate for the second order lower sideband $l_2$ a compensation circuit 14 may be added to the pulse-width modulator, for example a circuit as described in US—A— 4,322,342.

Figure 7 shows an example of an apparatus for decoding a signal which has been encoded by means of the apparatus shown in Figure 6. The first-mentioned apparatus comprises a player 17 which reads the record carrier. The output signal is applied to a low-pass filter 15 which functions as pulse-width demodulator. Indeed, the signal shown in Figure 8a can be filtered out of the signal shown in Figure 8d by means of a low-pass filter having a cut-off frequency situated between the frequency bands occupied by these signals. The digital audio signal thus obtained is passed through a high-frequency pre-emphasis filter 16 which is complementary to the low-frequency pre-emphasis filter 8 (Figure 6) and subsequently it is converted into an analogue signal by means of a circuit 18 comprising an EFM-demodulator and a digital-to-analogue converter, the signal processing being synchronized by a reference frequency $f_1$. The circuit 18 may be as described in the afore-mentioned issue of "Philips Technical Review" and may comprise IC's which are commercially available under the type numbers SAA 7000, SAA 7020, SAA 7030, MAB 8410, TDA 1540 and Random access memory 6116. The analogue audio signal (in stereo version) is then available on output 19. The output signal of the player 17 is also applied to an FM-demodulator 19, whose output signal is transferred to an output 21 *via* a syncseparator circuit 20. The extracted synchronizing signal, the horizontal synchronizing signal of frequency $f_H$, is applied to a motor control circuit 22, which controls the speed of the player 17 in such a way that the frequency $f_H$ corresponds to a reference frequency $f_2$ within narrow limits.

In principle, the reference frequencies $f_1$ and $f_2$ may be supplied by two separate generators. However, this is problematic because stringent requirements must be imposed on the stability and the mutual relationship of these two reference frequencies. This may be solved by deriving the two frequencies from one reference oscillator 23 using frequency division, so that the phase-locked loops, which are not stable enough, may be dispensed with.

In the embodiment shown in Figure 7 the oscillator 23 is tuned directly to the frequency $f_1$ and $f_2$ is obtained by dividing the frequency $f_1$ by means of a divider stage 24. For PAL the frequency $f_2$ must be 15.625 kHz, whilst $f_1$ must be 4.2336 MHz (96 times the sampling frequency of 44.1 kHz) within specific tolerances when said IC's are used. It has been found that this is possible by tuning the oscillator to 4.234375 MHz and dividing it by 271, so that $f_2$ has exactly the correct value and $f_1$ has a deviation of $2.10^{-4}$, which is acceptable for the reqired reproduction quality.

For NTSC acceptable values are obtained by using an oscillator 23 which is tuned to 4.232518 MHz and a divider 24, which divides by 269. A deviation of $10^{-4}$ for the frequency $f_1$ is then found.

However, the slight deviations of these frequencies may give rise to a timing error in the decoding of the audio signal. Indeed, when the digital signal is decoded with a different frequency than that with which it has been encoded, a timing error arises which accumulates in reproduction. This may be compensated for by introducing a corresponding timing error during encoding, for example by means of a sampling-frequency conversion. However, during recording this compensation results in a time shift between the picture and sound which increases as the length of the recording increases. If this shift exceeds specific limits, this becomes perceptible during reproduction in that the picture and sound are no longer in "lip synchronism" *i.e.* the sound uttered by a person is visibly non-synchronous with the lip movements. An alternative which does not give rise to this problem, is to rigidly interlock the two reference frequencies $f_1$ and $f_2$ required during recording without compensation and to use the apparatus shown in Figure 9 during reproduction. In contradistinction to the apparatus shown in Figure 7, this apparatus generates the reference frequency $f_2$ directly by means of an ocillator 26, the generation not being locked to the generation of the reference frequency $f_2$, and the reference frequency $f_1$ is generated by a controllable oscillator 27, which *via* comparator 25, for example a phase comparator, is locked to a reference derived from the digital signal. A possibility of achieving this interlock is obtained by modifying the circuit described on page 155. Figure 3 of the issue of "Philips Technical Review" mentioned in the introductory part, in which in the case of Compact-Disk-Digital-Audio the demodulated digital signal is shifted in a register in the rhythm in which it is received and is shifted out of this register by means of a constant clock signal, so that the time base is restored. A signal which is a meausre of the degree of filling of the register is then a measure of the synchronism between the rhythm of reception of the digital signal and the constant clock signal, by means of which signal the disk-drive motor is controlled. This modification to said principle for use in the apparatus shown in Figure 9 is shown in Figure 10. The EFM-modulated digital audio signal is applied to a demodulator 28 whose output signal, which is the demodulated digital signal, is shifted into a shift register 29 in the rhythm with which it is received, said signal being taken from this register in the rhythm of the controlled oscillator 27. A signal S which is a measure of the degree of filling of the register 29 controls the oscillator 27, so that the output of the digital signal is in synchronism with the input. In this way the signal $f_1$ on the output of the oscillator 27 is in synchronism with the digital audio signal.

Instead of subjecting a digital audio signal to EFM modulation and subsequently storing it on the disc, it is possible to subject other digital data to EFM modulation and store them for example as data signals for a video-game computer. Alternatively, it is possible to store time-compressed speech in combination with still pictures. The EFM spectrum has a capacity of 1.5 Mbit/sec., speed reproduction of a satisfactory quality being possible with 50 kbit/sec. In combination with still pictures a playing-time extension by a factor 30 is then attainable.

If in accordance with the invention a digital signal with a sampling frequency of 44.1 kHz and a word length of 2×16 bits (16 bits per stereo channel) is subjected to EFM modulation and accommodated in the lower band of the analog video signal, it is found that in the case of an NTSC video disc the analog FM audio signals can be maintained, so that such video discs can also be played on video disc players which are not equipped with a reproducing circuit for digital signals. However, in the case of PAL video discs it is found that the available bandwidth is not adequate to accommodate both the analog FM audio channels and a digital EFM channel with a sampling frequency of 43.1 kHz and a word length of 2×16 bits. If the analog audio channels must now be maintained for the sake of compatibility, a digitally encoded audio signal can be accommodated only if the bandwidth is limited drastically. A first limitation may then be a limitation of the word length of the digital words. A limitation to 2×12 bits is then very attractive because this permits the commercially available ICs for EFM demodulation and error correction to be used in unmodified form. Indeed, in the case of EFM modulation in accordance with the Compact Disc standard 6 words of 2×16 bits are grouped into frames and which are EFM modulated. These frames can then accommodate 8 words of 2×12 bits. If in existing ICs the various clock frequencies are reduced in conformity with a sampling frequency of 32 kHz, i.e. reduced by a factor of 32/44.1, it is possible to accommodate a digital audio signal (or other signal) of 2×12 bits with a sampling frequency of 32 kHz in the lower video band of PAL video discs whilst maintaining two analog FM audio channels and with the possibility of using standard EFM demodulation circuits.

**Claims**

1. A method of encoding a recording signal comprising a composite colour video signal and a further signal in a transmission system for recording and reproducing said recording signal on the record carrier, in particular an optically readable disc-shaped record carrier, a carrier signal having a frequency in the range of 6.5—9.3 MHz being frequency-modulated by the composite colour video signal, characterized in that the further signal is a digital signal comprising a bit stream of data bits which can each assume a limited mumber of discrete values, which digital signal occupies a frequency band below the first order side band of the frequency-modulated carrier signal, and said frequency-modulated carrier signal is pulse-width-modulated by the digital signal.

2. A method as claimed in claim 1, characterized in that the further signal comprises a series of digital words with a repetition frequency of 44.1 kHz, which is subjected to EFM-modulation prior to recording.

3. A method as claimed in Claim 2, characterized in that prior to recording the digital signal is passed through a low-pass filter with a cut-off frequency in the range from 1.5 to 2 MHz.

4. A method as claimed in Claim 1, 2 or 3, characterized in that prior to recording the digital signal is passed through a low-frequency pre-emphasis filter in which signals of a frequency below a cut-off frequency are emphasized relative to signals of a frequency above said cut-off frequency and, after read-out, are passed through a filter which is complementary thereto.

5. A method as claimed in claim 4, characterized in that the cut-off frequency of the low-frequency pre-emphasis filter is situated in the range from 100 kHz to 1 MHz.

6. A method as claimed in any one of the Claims 2 to 5, characterized in that during reproduction of the recorded signal a first reference frequency, which is related to said repetition frequency of 44.1 kHz, is generated for the decoding of the digital signal, a second reference frequency for the processing of a composite colour video signal, which second reference frequency is related to the horizontal synchronizing frequency of said video signal, is generated and said first and second reference frequencies are both derived from a third reference frequency.

7. A method as claimed in Claim 6, characterized in that the composite colour video signal is a PAL-colour video signal and the first and the second reference frequency are derived from the third reference frequency of $n \times 4.234375$ MHz ($n=1, 2, 3, 4 \ldots$), the second reference frequency being derived from said third reference frequency by dividing said third reference frequency by $n \times 271$.

8. A method as claimed in Claim 6, characterized in that the composite colour video signal is an NTSC-colour video signal and the first and the second reference frequency are derived from a third reference frequency of $n \times 4.232518$ MHz ($n=1, 2, 3, 4, \ldots$), the second reference frequency being derived from said third reference frequency by dividing said third reference frequency by $n \times 269$.

9. A record carrier provided with a recording signal encoded in conformity with the method as claimed in any one of the Claims 1 to 8, characterized by a track pattern of optically detectable areas which alternate with intermediate areas, which areas have a mutual spacing in the track direction which is modulated in conformity with the instantaneous period of the frequency-modulated composite colour video signal and a length relative to the intermediate areas which can assume substantially at least two distinct discrete values, the digital signal being encoded in the sequence of said distinct values.

10. An apparatus for carrying out the method as claimed in any one of the Claims 1 to 8, characterized in that it comprises an FM-modulator for modulating a composite colour video signal on a carrier wave having a frequency in the range of 6.5—9.3 MHz and a pulse-width modulated for pulse-width modulation of said frequency-modulated carrier signal by a digital signal comprising a bit stream of data bits which each can assume a limited number of discrete values, which digital signal occupies a frequency band below the first-order lower side band of the frequency-modulated carrier signal.

11. An apparatus as claimed in Claim 10, characterized in that the pulse-width modulator is preceded by an EFM-modulator.

12. An apparatus as claimed in Claim 11, characterized in that a low-pass filter having a cut-off frequency in the range from 1.5 to 2 MHz is arranged between the EFM-modulator and the pulse-width modulator.

13. An apparatus as claimed in Claim 10, 11 or 12, characterized in that the pulse-width modulator is preceded by a low-frequency pre-emphasis filter in which signal of a frequency lower than a cut-off frequency are emphasized relative to signals of a frequency higher than said cut-off frequency.

14. An apparatus as claimed in Claim 13, characterized in that the cut-off frequency of the low-frequency pre-emphasis filter is situated in the range from 100 kHz to 1 MHz.

15. An apparatus as claimed in any one of the Claims 10 to 14, characterized in that there are provided means for producing the second-order lower side-band component of the modulated composite colour video signal.

16. An apparatus for reproducing a signal encoded by the method as claimed in any one of the Claims 1 to 8, characterized in that it comprises an FM-demodulator for recovering the composite colour video signal and a pulse-width demodulator for recovering the digital signal.

17. An apparatus as claimed in Claim 16, characterized in that the pulse-width demodulator is followed by an EFM-demodulator.

18. An apparatus as claimed in Claim 16 or 17, characterized in that the pulse-width demodulator is followed by a high-frequency pre-emphasis filter in which signals of a frequency above a cut-off frequency are emphasized relative to signals of a frequency below said cut-off frequency.

19. An apparatus as claimed in Claim 18, characterized in that the cut-off frequency of the high-frequency pre-emphasis filter is situated in the range from 100 kHz to 1 MHz.

20. An apparatus as claimed in any one of the Claims 16 to 19, characterized by a first circuit for supplying a first reference frequency which is related to a repetition frequency of 44.1 kHz for decoding the digital signal a second circuit for supplying a second reference frequency which is related to the horizontal synchronizing frequency of said video signal, and a frequency generator which supplies a third reference frequency to which the first and second reference frequencies are locked.

21. An apparatus as claimed in Claim 20, characterized in that the frequency generator is tuned to a frequency of $n \times 4.234375$ MHz ($n=1, 2, 3, 4 \ldots$) and the second circuit produces the second reference frequency by dividing the third reference frequency by $n \times 271$.

22. An apparatus as claimed in Claim 20, characterized in that the frequency generator is tuned to a frequency of $n \times 4.232518$ ($n=1, 2, 3, 4 \ldots$) and the second circuit produces the secnd reference frequency by dividing the third reference frequency by $n \times 269$.

23. An apparatus for reproducing a signal encoded by the method as claimed in any one of the Claims 1 to 5, characterized in that it comprises an FM-demodulator for recovering the composite colour video signal and a pulse-width demodulator for recovering the digital signal.

24. An apparatus as claimed in Claim 23, characterized in that the pulse-width demodulator is followed by an EFM-demodulator.

25. An apparatus as claimed in Claim 23 or 24, characterized in that the pulse-width demodulator is followed by a high-frequency pre-emphasis filter in which signals of a frequency above a cut-off frequency are emphasized relative to signals of a frequency below said cut-off frequency.

26. An apparatus as claimed in Claim 25, characterized in that the cut-off frequency of the high-frequency pre-emphasis filter is situated in the range from 100 kHz to 1 MHz.

27. An apparatus as claimed in any one of the Claims 23 to 26, characterized by a video-time-base signal separating circuit for extracting a video-time-base signal from the demodulated colour video signal, a phase-comparator circuit for comparing the video-time-base signal with the video-time-base reference signal and supplying a control signal as a function of the phase difference, a speed-control circuit for controlling the speed of transport of the record carrier as a function of said control signal in order to eliminate video-time-base errors, a controllable oscillator circuit for supplying a signal which is related to a repetition frequency of the digital signal, and a control loop for locking said oscillator circuit to a data-time-base signal which is derivable from the digital signal.

28. An apparatus for reproducing a recording signal from a record carrier, in particular an optically readable disc-shaped record carrier, which recording signal comprises a composite colour video signal and a further signal formed by a digital signal comprising a bit stream of data bits which each can assume a limited number of discrete values, said recording signal being recorded on the record carrier in the form of a carrier wave having a frequency in the range of 6.5—9.3 MHz, which carrier is frequency-modulated by the composite colour video signal, which frequency-modulated signal is pulse-width modulated by the digital signal, said digital signal occupying a frequency band below the first-order sideband of the frequency-modulated carrier signal, which apparatus comprises an FM-demodulator for recovering the composite colour video signal, a pulse-width demodulator for recovering the digital signal, a video-time-base reference-signal generator, a video-time-base signal separating circuit for extracting a video-time-base signal from the demodulated colour video signal, a phase comparator circuit for comparing the video-time-base signal with a video-time-base-reference signal and producing a control signal as a function of the phase difference, a speed-control circuit for controlling the speed of transport of the record carrier as a function of said control signal in order to eliminate possible video-time-base errors, a controllable oscillator circuit for supplying a signal which is related to the bit frequency of the digital signal and control loop for locking the oscillator circuit to a data-time-base signal which is derivable from the digital signal.

29. A method as claimed in Claim 1, characterized in that the further signal comprises a sequence of 2×12-bit digital words, 8 words of 2×12 bits being grouped into frames and being subjected to EFM modulation prior to recording.

30. A method as claimed in Claim 29, characterized in that the 2×12-bit digital words in said sequence have a repetition frequency of 32 kHz.

31. An apparatus for carrying out the method as claimed in Claim 29 or 30, characterized in that it comprises an FM-modulator for modulating a composite colour video signal on a carrier wave having a frequency in the range of 6.5—9.3 MHz and a pulse-width modulator for pulse-width modulation of said frequency-modulated carrier signal by a digital signal comprising a bit stream of data bits which each can assume a limited number of discrete values, which digital signal occupies a frequency band below the first-order lower side band of the frequency-modulated carrier signal.

32. An apparatus for reproducing a signal encoded by the method as claimed in Claim 29 or 30, characterized in that it comprises a FM-demodulator for recovering the composite colour video signal and a pulse-width demodulator for recovering the digital signal.

33. An apparatus as claimed in Claim 32, characterized in that the pulse-width demodulator is followed by an EFM-demodulator.

34. An apparatus for reproducing a signal encoded by the method as claimed in Claim 29 or 30, characterized in that it comprises an FM-demodulator for recovering the composite colour video signal and a pulse-width demodulator for recovering the digital signal.

35. An apparatus as claimed in Claim 34, characterized in that the pulse-width demodulator is followed by an EFM-demodulator.

**Patentansprüche**

1. Verfahren zum Codieren eines Aufzeichnungssignals, mit einem Farbvideosignalgemisch und einem weiteren Signal in einem Übertragungssystem zum Aufzeichnen und Wiedergeben dieses Aufzeichnungssignals auf einem Aufzeichnungsträger, insbesondere einem optisch lesbaren, scheibenförmigen Aufzeichnungsträger, wobei ein Trägersignal mit einer Frequenz im Bereich von 6,5—9,3 MHz vom Farbvideosignalgemisch frequenzmoduliert wird, dadurch gekennzeichnet, dass das weitere Signal ein digitales Signal ist, das aus einem Bitfluss von Datenbits besteht, die je eine beschränkte Anzahl diskreter Werte einnehmen können und dass dieses digitale Signal ein Frequenzband unter dem Seitenband 1. Ordnung des frequenzmodulierten Trägersignals einnimmt, und dass dieses frequenzmodulierte Trägersignal vom digitalen Signal impulsbreitenmoduliert wird.

2. Verfahren nach Anspruch 1, dadurch gekennzeichnet, dass das weitere Signal eine Reihe digitaler Wörter mit einer Wiederholungsfrequenz von 44,1 kHz enthält, die vor der Aufzeichnung einer ERF-Modulation unterworfen wird.

3. Verfahren nach Anspruch 2, dadurch gekennzeichnet, dass das digitale Signal vor der Aufzeichnung ein Tiefpassfilter mit einer Grenzfrequenz im Bereich von 1,5 bis 2 MHz durchläuft.

4. Varfahren nach Anspruch 1, 2 oder 3, dadurch gekennzeichnet, dass das digitale Signal vor der Aufzeichnung ein Tiefenanhebefilter, in dem Signale mit einer Frequenz unterhalb einer Grenzfrequenz in bezung auf Signale mit einer Frequenz höher als die Grenzfrequenz angehoben werden, und nach dem Lesen ein komplementäres Filter durchläuft.

5. Verfahren nach Anspruch 4, dadurch gekennzeichnet, dass die Grenzfrequenz des Tiefenanhebefilters im Bereich vom 100 kHz bis 1 MHz liegt.

6. Verfahren nach einem oder mehreren der Ansprüche 2 bis 5, dadurch gekennzeichnet, dass bei der Wiedergabe des aufgezeichneten Signals eine erste Referenzfrequenz, die mit der genannten Abtastfrequenz von 44,1 kHz im Zusammenhang steht, für Decodierung des digitalen Signals erzeugt wird, und dass eine zweite Referenzfrequenz für die Verarbeitung des Farbvideosignalgemisches erzeugt wird, welche zweite Referenzfrequenz mit der horizontalen Synchronisationsfrequenz des Videosignals im Zusammenhang steht, und dass diese ersten bzw. zweiten Referenzfrequenzen aus der gleichen dritten Referenzfrequenz abgeleitet werden.

7. Verfahren nach Anspruch 6, dadurch gekennzeichnet, dass das Farbvideosignalgemisch ein PAL-Farbvideosignal ist, dass die ersten und zweiten Referenzfreqenzen aus einer dritten Referenzfrequenz von $n \times 4,234375$ MHz ($n = 1, 2, 3, 4, \ldots$) erhalten werden, wobei die zweite Referenzfrequenz aus dieser dritten Referenzfrequenz mittels Teilung dieser dritten Referenzfrequenz durch $n \times 271$ erhalten wird.

8. Verfahren nach Anspruch 6, dadurch gekennzeichnet, dass das Farbvideosignalgemisch ein NTSC-Farbvideosignal ist, dass die ersten und zweiten Referenzfrequenzen aus einer dritten Referenzfrequenz von $n \times 4,232518$ MHz ($n = 1, 2, 3, 4, \ldots$) erhalten werden, wobei die zweite Referenzfrequenz aus dieser dritten Referenzfrequenz mittels Teilung dieser dritten Referenzfrequenz durch $n \times 269$ erhalten wird.

9. Aufzeichnungsträger mit einem Aufzeichnungssignal, das gemäss dem Verfahren nach einem oder mehreren der Ansprüche 1 bis 8 codiert ist, dadurch gekennzeichnet, dass ein Spurenmuster optisch detektierbarer Gebiete vorgesehen ist, die mit Zwischengebieten abwechseln und einen gegenseitigen Abstand in der Spurrichtung aufweisen, der entsprechend der augenblicklichen Periodendauer des frequenzmodulierten Farbvideosignalgemisches und mit einer relativen Länge in bezug auf die benachbarten Zwischengebiete moduliert ist, die im wesentlichen zumindest zwei unterscheidbare diskrete Werte annehmen kann, wobei in der Aufeinanderfolge dieser unterscheidbaren Werte das digitale Signal codiert ist.

10. Anordnung zum Durchführen des Verfahrens nach einem oder mehreren der Ansprüche 1 bis 8, dadurch gekennzeichnet, dass sie einen Frequenzmodulator zum Modulieren eines Farbvideosignalgemisches auf einem Träger mit einer Frequenz im Bereich 6,5—3,9 MHz und einen Impulsbreitenmodulator zum Modulieren dieses frequenzmodulierten Trägersignals in der Impulsbreite durch ein digitales Signal enthält, das aus einem Bitfluss von Datenbits besteht, die je eine beschränkte Anzahl diskreter Werte annehmen können, und dieses digitale Signal ein Frequenzband unter dem Seitenband 1. Ordnung des frequenzmodulierten Trägersignals einnimmt.

11. Anordnung nach Anspruch 10, dadurch gekennzeichnet, das dem Impulsbreitendemodulator ein EFM-Modulator vorgeschaltet ist.

12. Anordnung nach Anspruch 11, dadurch gekennzeichnet, dass zwischen den EFM-Modulator und den Impulsbreitenmodulator ein Tiefpassfilter mit einer Grenzfrequenz im Bereich von 1,5 bis 2 MHz aufgenommen ist.

13. Anordnung nach Anspruch 10, 11 oder 12, dadurch gekennzeichnet, dass vor dem Impulsbreitenmodulator ein Tiefenanhebefilter vorgesehen ist, in dem Signale mit einer Frequenz unterhalb einer Grenzfrequenz in bezug auf Signale mit einer Frequenz oberhalb dieser Grenzfrequenz angehoben werden.

14. Anordnung nach Anspruch 13, dadurch gekennzeichnet, dass die Grenzfrequenz des Tiefenanhebefilters im Bereich von 100 kHz bis 1 MHz liegt.

15. Anordnung nach einem oder mehreren der Ansprüche 10 bis 14, dadurch gekennzeichnet, dass Mittel zum Reduzieren der unteren Seitenbandkomponente 2. Ordnung des modulierten Farbvideosignalgemisches vorgesehen sind.

16. Anordnung zum Wiedergeben eines Signals, das gemäss dem Verfahren nach einem oder mehreren der Ansprüche 1 bis 8 codiert ist, dadurch gekennzeichnet, dass die Anordnung einen Frequenzdemodulator zum Rückgewinnen des Farbvideosignalgemisches und einen Impulsbreitendemodulator zum Rückgewinnen des digitalen Signals enthält.

17. Anordnung nach Anspruch 16, dadurch gekennzeichnet, dass dem Impulsbreitendemodulator ein EFM-Demodulator nachgeschaltet ist.

18. Anordnung nach Anspruch 16 oder 17, dadurch gekennzeichnet, dass dem Impulsbreitendemodulator ein Höhenanhebefilter nachgeschaltet ist, in dem Signale mit einer Frequenz oberhalb einer Grenzfrequenz in bezug auf Signale mit einer Frequenz unterhalb dieser Grenzfrequenz angehoben werden.

19. Anordnung nach Anspruch 18, dadurch gekennzeichnet, dass die Grenzfrequenz des Höhenanhebefilters im Bereich vin 100 kHz bis 1 MHz liegt.

20. Anordnung nach einem oder mehreren der Ansprüche 16 bis 19, dadurch gekennzeichnet, dass eine erste Schaltung zum Erzeugen einer ersten Referenzfrequenz, die mit einer Wiederholungsfrequenz von 44,1 kHz für die Decodierung des digitalen Signals verknüpft ist, eine zweite Schaltung zum Erzeugen einer zweiten Referenzfrequenz, die mit der horizontalen Synchronisationsfrequenz dieses Videosignals im Zusammenhang steht, und ein Frequenzgenerator vorgesehen sind, der eine dritte Referenzfrequenz erzeugt, mit der die ersten bzw. zweiten Referenzfrequenzen verbunden sind.

21. Anordnung nach Anspruch 20, dadurch gekennzeichnet, dass der Frequenzgenerator auf eine Frequenz von n×4.234375 MHz (n=1, 2, 3, 4, ...) abgestimmt ist, und dass die zweite Schaltung die zweite Referenzfrequenz mittels Teilung der dritten Referenzfrequenz durch n×271 erzeugt.

22. Anordnung nach Anspruch 20, dadurch gekennzeichnet, dass der Frequenzgenerator auf eine Frequenz n×4,232518 (n=1, 2, 3, 4, ...) abgestimmt ist, und dass die zweite Schaltung die zweite Referenzfrequenz mittels Teilung der dritten Referenzfrequenz durch n×269 erzeugt.

23. Anordnung zum Wiedergeben eines Signals, das gemäss dem Verfahren nach einem oder mehreren der Ansprüche 1 bis 5 codiert ist, dadurch gekennzeichnet, dass diese Anordnung einen Frequenzdemodulator zum Rückgewinnen des Farbvideosignalgemisches und einen Impulsbreitendemodulator zum Rückgewinnen des digitalen Signals enthält.

24. Anordnung nach Anspruch 23, dadurch gekennzeichnet, dass dem Impulsbreitendemodulator ein EFM-Demodulator nachgeschaltet ist.

25. Anordnung nach Anspruch 23 oder 24, dadurch gekennzeichnet, dass dem Impulsbreitendemodulator ein Höhenanhebefilter nachgeschaltet ist, in dem Signale mit einer Frequenz oberhalb einer Grenzfrequenz in bezug auf Signale mit einer Frequenz unterhalb dieser Grenzfrequenz angehoben werden.

26. Anordnung nach Anspruch 25, dadurch gekennzeichnet, dass die Grenzfrequenz des Höhenanhebefilters im Bereich von 100 kHz bis 1 MHz liegt.

27. Anordnung nach einem oder mehreren der Ansprüche 23 bis 26, dadurch gekennzeichnet, dass eine Videozeitbasissignaltrennschaltung zum Abtrennen eines Videozeitbasissignals vom demodulierten Farbvideosignal, eine Phasenvergleichsschaltung zum Vergleichen des Videozeitbasissignals mit dem Videozeitbasisreferenzsignal und zum Erzeugen eines Steuersignals als Funktion des Phasenunterschieds, eine Antriebssteuerschaltung zum Steuern der Vorschubgeschwindigkeit des Aufzeichnungsträgers als Funktion dieses Steuersignals zum Unterdrücken auftretender Videozeitbasisfehler, eine regelbare Oszillatorschaltung zum Erzeugen eines Signals, das mit einer Wiederholungsfrequenz des digitalen Signals im Zusammenhang steht, und eine Regelschleife zum Verknüpfen dieser Oszillatorschaltung mit einem Zeitbasissignal vorgesehen sind, das aus dem digitalen Audiosignal ableitbar ist.

28. Anordnung zum Wiedergeben eines Aufzeichnungssignals eines Aufzeichnungsträgers, insbesondere eines optisch lesbaren, scheibenförmigen Aufzeichnungsträgers, wobei dieses Aufzeichnungssignal ein Farbvideosignalgemisch und ein weiteres Signal enthält, das voneinem digitalen Signal gebildet wird, das aus einem Bitfluss von Datenbits besteht, die je eine beschränkte Anzahl diskreter Werte ausnehmen können, wobei dieses Aufzeichnungssignal auf dem Aufzeichnungsträger in Form eines Trägers mit einer Frequenz im Bereich von 6,5—9,3 MHz aufgezeichnet, its, wobei dieser Träger vom Farbvideosignalgemisch frequenzmoduliert und das frequenzmodulierte Signal vom digitalen Signal impulsbreitenmoduliert ist, wobei dieses digitale Signal ein Frequenzband unter dem Seitenband 1. Ordnung des frequenzmodulierten Trägersignals einnimmt, wobei die Anordnung einen Frequenzdemodulator zum Rückgewinnen des Farbvideosignalgemisches, einen Impulsbreitendemodulator zum Rückgewinnen des digitalen Signals, einen Videozeitbasisreferenzsignalgenerator, eine Videozeitbasissignaltrennschaltung zum Abtrennen eines Videozeitbasissignals vom demodulierten Farbvideosignal, eine Phasenvergleichsschaltung zum Vergleichen des Videozeitbasissignals mit einem Videozeitbasisreferenzsignal und zum Erzeugen eines Steuersignals als Funktion des Phasenunterschieds, eine Antriebssteuerschaltung zum Steuern der Vorschubgeschwindigkeit des Aufzeichnungsträgers als Funktion dieses Steuersignals zum Unterdrücken auftretender Videozeitbasisfehler, eine regelbare Oszillatorschaltung zum Erzeugen eines Signals das mit der der Bitfrequenz des digitalen Signals im Zusammenhang steht, und eine Regelschleife zum Verknüpfen der Oszillatorschaltung mit einem Datenzeitbasissignal enthält, das vom digitalen Signal ableitbar ist.

29. Verfahren nach Anspruch 1, dadurch gekennzeichnet, dass das weitere Signal aus einer Reihe von digitalen 2×12 Bit Wörtern besteht, wobei jeweils 8 Wörter von 2×12 Bits zu Rahmen gruppiert und vor dem Aufzeichnen EFM-modulierte werden.

30. Verfahren nach Anspruch 29, dadurch gekennzeichnet, dass die digitalen 2×12 Bit-Wörter in dieser Reihe eine Wiederholungsfrequenz von 32 kHz aufweisen.

31. Anordnung zum Durchführen des Verfahren nach Anspruch 29 oder 30, dadurch gekennzeichnet, dass sie einen Frequenzmodulator zum Modulieren eines Farbvideosignalgemisches auf einem Träger mit einer Frequenz im Bereich von 6,5—9,3 MHz und einen Impulsbreitenmodulator zum Modulieren dieses frequenzmodulierten Trägersignals in der Impulsbreite durch ein digitales Signal enthält, das aus einem Bitfluss von Datenbits besteht, die je eine beschränkte Anzahl diskreter Werte annehmen können, und das digitale Signal ein Frequenzband unter dem Seitenband 1. Ordnung des frequenzmodulierten Trägersignals einnimmt.

32. Anordnung zum Erzeugen eines nach dem unter Anspruch 29 oder 30 angegebenen Verfahren codierten Signals, dadurch gekennzeichnet, dass die Anordnung einen Frequenzdemodulator zum Rückgewinnen des Farbvideosignalgemisches und einen Impulsbreitendemodulator zum Rückgewinnen des digitalen Signals enthält.

33. Anordnung nach Anspruch 32, dadurch gekennzeichnet, dass dem Impulsbreitendemodulator ein EFM-Demodulator nachgeschaltet ist.

34. Anordnung zum Wiedergeben eines nach dem unter Anspruch 29 oder 30 angegebenen Verfahren codierten Signals, dadurch gekennzeichnet, dass diese Anordnung einen Frequenzdemodulator zum Rückgewinnen des Farbvideosignalgemisches und einen Impulsbreitendemodulator zum Rückgewinnen des digitalen Signals enthält.

35. Anordnung nach Anspruch 34, dadurch gekennzeichnet, dass dem Impulsbreitendemodulator ein EFM-Demodulator nachgeschaltet ist.

**Revendications**

1. Procédé de codage d'un signal d'enregistrement comportant un signal vidéo de couleur composé et un autre signal dans un système de transmission pour enregistrer et lire ledit signal d'enregistrement sur le support d'enregistrement, notamment un support d'enregistrement en forme de disque pouvant être lu par voie optique, une porteuse de fréquence située dans la gamme comprise entre 6,5 MHz et 9,3 MHz étant modulée en fréquence par le signal vidéo de couleur composé, caractérisé en ce que l'autre signal est un signal numérique comportant un train de bits de données qui peuvent prendre chacun un nombre limité de valeurs discrétes, signal binaire qui occupe une bande de fréquences située au-dessous de la bande latérale de premier ordre de la porteuse modulé en fréquence, alors que ladite porteuse modulée en fréquence est modulée en largeur d'impulsion par le signal numérique.

2. Procédé selon la revendication 1, caractérisé en ce que l'autre signal comporte une série de mots numériques de fréquence de répétition de 44.1 kHz qui est soumise à une modulation EFM avant l'enregistrement.

3. Procédé selon la revendication 2, caractérisé en ce qu'avant l'enregistrement, le signal numérique est amené à traverser un filtre passe-bas ayant une fréquence de coupure située dans la gamme comprise entre 1,5 MHz et 2 MHz.

4. Procédé selon la revendication 1, 2, ou 3, caractérisé en ce qu'avant l'enregistrement, le signal numérique est amené à passer par un filtre de préaccentuation à basse fréquence dans lequel des signaux de fréquence inférieure à une fréquence de coupure sont préaccentués par rapport à des signaux de fréquence supérieure à ladite fréquence de coupure et, après la lecture, à passer par un filtre complémentaire de celui-ci.

5. Procédé selon la revendication 4, caractérisé en ce que la fréquence de coupure du filtre de préaccentuation à basse fréquence est située dans la gamme comprise entre 100 kHz et 1 MHz.

6. Procédé selon l'une quelconque des revendications 2 à 5, caractérisé en ce qu'au cours de la lecture du signal enregistré, est engendrée une première fréquence de référence, liée à ladite fréquence de répétition de 44,1 kHz, pour le décodage du signal numérique, en ce qu'il est engendré une deuxième fréquence de référence pour le traitement d'un signal vidéo de couleur composé, deuxième fréquence de référence qui est liée à la fréquence de synchronisation horizontale dudit signal vidéo, et en ce que lesdites première et deuxième fréquences de référence sont toutes les deux déduites d'une troisième fréquence de référence.

7. Procédé selon la revendication 6, caractérisé en ce que le signal vidéo de couleur composé est un signal vidéo de couleur PAL et en ce que les première et deuxièmes fréquences de référence sont déduites de la troisième fréquence de référence de $n \times 4,234375$ MHz (n=1, 2, 3, 4, ...), la déduction de la deuxième fréquence de référence étant déduite de ladite troisième fréquence de référence s'effectuant par division de cette troisième fréquence de référence par $n \times 271$.

8. Procédé selon la revendication 6, caractérisé en ce que le signal vidéo de couleur composé est un signal vidéo de couleur NTSC et en ce que les première et deuxième fréquences de référence sont déduites d'une troisième fréquence de référence de $n \times 4,232518$ MHz (n=1, 2, 3, 4, ...), la déduction de la deuxième fréquence de référence de ladite troisième fréquence de référence s'effectuant par division de cette troisième fréquence de référence par $n \times 269$.

9. Suppport d'enregistrement muni d'un signal d'enregistrement codé suivant le procédé selon l'une quelconque des revendications 1 à 8, caractérisé par une configuration de pistes formeé de zones optiquement détectables alternant avec des zones intermédiaires, zones qui, dans le sens de la piste, ont un écartement moduléa selon la période instantanée du signal vidéo de couleur composé modulé en fréquence et qui, par rapport aux zones intermédiaires, ont une longueur pouvant prendre sensiblement au moins deux valeurs discrètes distinctes, le signal numérique étant codé dans l'ordre desdites valeurs distinctes.

10. Dispositif de mise en oeuvre du precédé selon l'une quelconque des revendications 1 à 8, caractérisé ec ce qu'il comporte, d'une part, un modulateur FM pour moduler un signal vidéo de couleur composé sur une porteuse ayant une fréquence située dans la gamme comprise entre 6,5 MHz et 9,3 MHz et, d'autre part, un modulateur de largeur d'impulsion pour moduler la largeur d'impulsion de ladite porteuse modulée en fréquence par un signal numérique comportant un train de bits de données pouvant prendre chacun un nombre limité de valeurs discrètes, signal numérique qui occupe une bande de fréquences située au-dessous de la bande latérale inférieure de premier ordre de la porteuse modulée en fréquence.

11. Dispositif selon la revendication 10, caractérisé en ce que le modulateur de largeur d'impulsion est précédé d'un modulateur EFM.

12. Dispositif selon la revendication 11, caractérisé en ce qu'entre le modulateur EFM et le modulateur de largeur d'impulsion, est intercalé en filtre passe-bas ayant une fréquence de coupure située dans la gamme comprise entre 1,5 MHz et 2 MHz.

13. Dispositif selon la revendication 10, 11 ou 12, caractérisé en ce que le modulateur de largeur d'impulsion est précédé d'un filtre de préaccentuation à basse fréquence dans lequel des signaux de fréquence inférieure à une fréquence de coupure sont préaccentués par rapport à des signaux de fréquence supérieure à ladite fréquence de coupure.

14. Dispositif selon la revendication 13, caractérisé en ce que la fréquence de coupure du filtre de préaccentuation à basse fréquence est située dans la gamme comprise entre 100 kHz et 1 MHz.

15. Dispositif selon l'une quelconque des revendications 10 à 14, caractérisé en ce qu'il est prévu des moyens pour fournir la composante de bande latérale inférieure de deuxième ordre du signal vidéo de couleur composé modulé.

16. Dispositif de lecture d'un signal codé suivant le procédé selon l'une quelconque des revendications 1 à 8, caractérisé en ce qu'il comporte un démodulateur FM pour récupérer le signal vidéo de couleur composé et un démodulateur de largeur d'impulsion pour récupérer le signal numérique.

17. Dispositif selon la revendication 16, caractérisé en ce que le démodulateur de largeur d'impulsion est suivi d'un démodulateur EFM.

18. Dispositif selon la revendication 16 ou 17, caractérisé en ce que le démodulateur de largeur d'impulsion est suivi d'un filtre de préaccentuation à fréquence élevée dans lequel des signaux de fréquence supérieure à la fréquence de coupure sont accentués par rapport à des signaux de fréquence inférieure à cette fréquence de coupure.

19. Dispositif selon la revendication 18, caractérisé en ce que la fréquence de coupure du filtre de préaccentuation à fréquence élevée est située dans la gamme comprise entre 100 kHz et 1 MHz.

20. Dispositif selon l'une quelconque des revendications 16 à 19, caractérisé par un premier circuit pour fournir une première fréquence de référence liée à une fréquence de répétition de 44,1 kHz pour le décodage du signal numérique, un deuxième circuit pour fournir une deuxième fréquence de référence liée à la fréquence de synchronisation horizontale dudit signal vidéo, et un générateur de fréquence fournissant une troisième fréquence de référence à laquelle sont calées les première et deuxième fréquences de référence.

21. Dispositif selon la revendication 20, caractérisé en ce que le générateur de fréquence est accordé à une fréquence de n×4,234375 MHz (n=1, 2, 3, 4 ...) et en ce que le deuxième circuit fournit la deuxième fréquence de référence par division de la troisième fréquence de référence par n×271.

22. Dispositif selon la revendication 20, caractérisé en ce que le générateur de fréquence est accordé à une fréquence de n×4,232518 (n=1, 2, 3, 4 ...) et en ce que le deuxième circuit fournit la deuxième fréquence de référence par division de la troisième fréquence de référence par n×269.

23. Dispositif de lecture d'un signal codé suivant le procédé selon l'une quelconque des revendications 1 à 5, caractérisé en ce qu'il comporte un démodulateur FM pour récupérer le signal vidéo de couleur composé et un démodulateur de largeur d'impulsion pour récupérer le signal numérique.

24. Dispositif selon la revendication 23, caractérisé en ce que le demodulateur de largeur d'impulsion est suivi d'un démodulateur EFM.

25. Dispositif selon la revendication 23 ou 24, caractérisé en ce que le démodulateur de largeur d'impulsion est suivi d'un filtre de préaccentuation à fréquence élevée dans lequel des signaux d'une fréquence supérieure à une fréquence de coupure sont acctentués par rapport à des signaux d'une fréquence inférieure à cette fréquence de coupure.

26. Dispositif selon la revendication 25, caractérisé en ce que la fréquence de coupure du filtre de préaccentuation à fréquence élevée est située dans la gamme comprise entre 100 kHz et 1 MHz.

27. Dispositif selon l'une quelconque des revendications 23 à 26, caractérisé par un circuit séparateur d'un signal de base de temps vidéo pour extraire un signal de base de temps vidéo du signal vidéo de couleur démodulé, un circuit comparateur de phases pour comparer le signal de base de temps vidéo avec le signal de référence de base de temps vidéo et pour fournir un signal de commande en fonction de la différence de phase, un circuit de commande de vitesse pour commander la vitesse de transport du support d'enregistrement en fonction dudit signal de commande afin d'émiminer les erreurs de base de temps vidéo, un circuit oscillateur commandable pour fournir un signal lié à la fréquence de répétition du signal numérique, et une boucle de réglage pour caler ledit circuit oscillateur à un signal de base de temps de données pouvant être déduit du signal numérique.

28. Dispositif de lecture d'un signal d'enregistrement sur un support d'enregistrement, notamment un support d'enregistrement en forme de disque à lecture optique, signal d'enregistrement comportant un signal vidéo de couleur composé et un autre signal formé formé par un signal numérique comportant un train de bits de données qui peuvent prendre chacun un nombre limité de valeurs discrètes, ledit signal d'enregistrement étant enregistré sur le support d'enregistrement sous la forme d'une porteuse de fre- quence située dans la gamme comprise entre 6,5 MHz et 9,3 MHz, porteuse qui est modulé en fréquence par le signal vidéo de couleur composé, le signal modulée en fréquence étant modulée en largeur d'impulsion par le signal numérique, alors que ledit signal numérique occupe une bande de fréquence située au-dessous de la bande latérale de premier ordre de la porteuse modulée en fréquence, dispositif comportant un démodulateur FM pour récupérer le signal vidéo de couleur composé, un démodulateur de largeur d'impulsion pour récupérer le signal numérique, un générateur de signaux de référence de base de temps vidéo, un circuit séparateur de signal de base de temps vidéo pour extraire un signal de base de temps vidéo du signal vidéo de couleur démodulé, un circuit comparateur de phase pour comparer le signal de base de temps vidéo avec un signal de référence de base de temps vidéo et pour fournir un signal de commande en fonction de la différence de phase, un circuit de commande de vitesse pour commander la vitesse de transport du support d'enregistrement en fonction dudit signal de commande afin d'éliminer des erreurs possibles de base de temps vidéo, un circuit oscillateur commandable pour fournir un signal lié à la fréquence de bits du signal numérique, et une boucle de réglage pour caler le circuit oscillateur à un signal de base de temps de données pouvant être déduit du signal numérique.

29. Procédé selon la revendication 1, caractérisé en ce que l'autre signal comporte une séquence de mots numériques de 2×12 bits, 8 mots de 2×12 bits étant groupés en trames et étant soumis à une modulation EFM avant l'enregistrement.

30. Procédé selon la revendication 29, caractérisé en ce que les mots numériques de 2×12 bits dans ladite séquence ont une fréquence de répétition de 32 kHz.

31. Dispositif de mise en oeuvre du procédé selon la revendication 29 ou 30, caractérisé en ce qu'il comporte un modulateur FM pour moduler un signal vidéo de couleur composé sur une porteuse ayant une fréquence située dans le gamme comprise entre 6,5 MHz et 9,3 MHz et un modulateur de largeur d'impulsion pour moduler la largeur d'impulsion de ladite porteuse modulée en fréquence par un signal numérique comportant un train de bits de données pouvant prendre chacun un nombre limité de valeurs discrètes, signal numérique qui occupe une bande de fréquence située au-dessous de la bande latérale inférieure de premier ordre de la porteuse modulée en fréquence.

32. Dispositif de lecture d'un signal codé suivant le procédé selon la revendication 29 ou 30, caractérisé en ce qu'il comporte un démodulateur FM pour récupérer le signal vidéo de couleur composé et un démodulateur de largeur d'impulsion pur récupérer le signal numérique.

33. Dispositif selon la revendication 32, caractérisé en ce que le démodulateur de largeur d'impulsion est suivi d'un démodulateur EFM.

34. Dispositif de lecture d'un signal codé suivant le procédé selon la revendication 29 ou 30, caractérisé en ce qu'il comporte un démodulateur FM pour récupérer le signal vidéo de couleur composé et un démodulateur de largeur d'impulsion pour récupérer le signal numérique.

35. Dispositif selon la revendication 34, caractérisé en ce que le démodulateur de largeur d'impulsion est suivi d'un démodulateur EFM.

FIG.1

FIG.2

FIG.8

FIG.3

FIG.4

FIG.5

FIG.6

FIG.7

FIG. 9

FIG. 10

4